# EUROPÄISCHE PATENTSCHRIFT

(11) **EP 2 815 157 B1**
(45) Veröffentlichungstag und Bekanntmachung des Hinweises auf die Patenterteilung: **29.03.2017**
(21) Anmeldenummer: 13704362.6
(22) Anmeldetag: 13.02.2013
(51) Int. Cl.: F16J 15/10

(54) **DICHTELEMENT, VORZUGSWEISE DICHTRING**
SEALING ELEMENT, PREFERABLY SEALING RING
ÉLÉMENT D'ÉTANCHÉITÉ, DE PRÉFÉRENCE BAGUE D'ÉTANCHÉITÉ

(30) Priorität: 14.02.2012 DE 102012002888
(43) Veröffentlichungstag der Anmeldung: 24.12.2014
(73) Patentinhaber: Dürr Systems AG, 74321 Bietigheim-Bissingen (DE)
(72) Erfinder: MARTIN, Herbert, 71384 Weinstadt (DE); BAUMANN, Michael, 74223 Flein (DE); BUCK, Thomas, 74343 Sachsenheim (DE)
(74) Vertreter: v. Bezold & Partner Patentanwälte - PartG mbB
(86) Internationale Anmeldenummer: PCT/EP2013/000422
(87) Internationale Veröffentlichungsnummer: WO 2013/120609

(56) Entgegenhaltungen:
- EP-A1- 2 236 865
- EP-A2- 0 718 529
- GB-A- 2 328 989

## Beschreibung

Die Erfindung betrifft ein Dichtelement, vorzugsweise einen Dichtring. Das Dichtelement ist insbesondere angepasst, um im Betriebszustand zwischen zwei Bauteilabschnitten zu dichten und in einer Nut, die in einem der zwei Bauteilabschnitte ausgebildet ist, durch die zwei Bauteilabschnitte komprimiert zu werden.

Zum allgemeinen Stand der Technik kann zunächst auf die GB 2 328 989 A, die ein Dichtelement zweckmäßig für Verbrennungsmotoren offenbart, und die EP 2 236 865 A1, die ein Dichtelement zweckmäßig für Mobiltelefone offenbart, verwiesen werden.

In der Lackiertechnik sind Dichtelemente erforderlich, um gegen Lack zu dichten, z.B. zur Abdichtung von Flanschpaketen, zur Abdichtung von Farbverschraubungen, bei Zerstäuberschnittstellen, Farbwechsler- und/oder Farbdruckreglerschnittstellen, etc.. Ein übliches Dichtelement dichtet zwischen zwei Bauteilabschnitten und ist in einer Nut platziert, die in einem der zwei Bauteilabschnitte ausgebildet ist. Ziel ist eine druckstabile und totraumfreie Abdichtung, um Leckage und Farbverschleppungen zu vermeiden, während gleichzeitig eine möglicherweise eine Spaltextrusion verursachende Nutüberfüllung vermieden werden soll. Die herkömmlichen Dichtelemente sind meist als rechteck- oder kreisförmige Dichtringe oder O-Ring-Abdichtungen ausgeführt. Die herkömmlichen Dichtringe sind meist mit zumindest einem der folgenden Nachteile verbunden:
- Nutüberfüllung, Spaltextrusion
- Leckage und Farbverschleppung aufgrund nicht vorhandener Totraumfreiheit
- Geringe Druckfestigkeit insbesondere bei dynamischer Druckbelastung

Eine Aufgabe der Erfindung ist es somit, ein verbessertes und/oder alternatives Dichtelement zu schaffen.

Diese Aufgabe wird insbesondere durch ein Dichtelement gemäß dem Hauptanspruch gelöst.

Erfindungsgemäß wird ein Dichtelement insbesondere für ein Beschichtungsanlagenbauteil geschaffen. Das Dichtelement ist vorzugsweise als Dichtring ausgeführt. Das Dichtelement ist ausgebildet, um zwischen zwei Bauteilabschnitten zu dichten und in einer Nut, die in einem der zwei Bauteilabschnitte angeordnet ist, durch die zwei Bauteilabschnitte komprimiert zu werden. Das Dichtelement umfasst zweckmäßig ein Profil mit zumindest zwei Außenflächen, die vorzugsweise einander gegenüberliegen. Vorzugsweise umfasst das Profil in Breitenrichtung unterschiedliche Profilhöhen.

Das Profil ist vorzugsweise ausgebildet, um im komprimierten Zustand so verformt zu werden, dass es sich mit einem seiner Seitenabschnitte in die Nutöffnung erstreckt und vorzugsweise dadurch die Nutöffnung z.B. einseitig in einer Breitenrichtung zumindest abschnittsweise schließt. Dadurch ist es insbesondere möglich, eine Leckage oder Fluid- oder Flüssigkeitsverschleppung (z.B. Farb-/Lackverschleppung) zumindest zu reduzieren.

Der zumindest eine Seitenabschnitt ist vorzugsweise an der dem Nutgrund abgewandten Außenfläche ausgebildet und/oder stellt z.B. in einer Breitenrichtung des Profils einen Seitenendabschnitt dar.

Es ist möglich, dass das Profil ausgebildet ist, um im komprimierten Zustand so verformt zu werden, dass es sich mit zwei seiner Seitenabschnitte in die Nutöffnung erstreckt und vorzugsweise dadurch die Nutöffnung z.B. beidseitig in Breitenrichtung zumindest abschnittsweise schließt.

Bei einer besonders bevorzugten Ausführungsform ist das Profil ausgebildet, um im komprimierten Zustand so verformt zu werden, dass es sich auch zwischen den zwei Seitenabschnitten in die Nutöffnung erstreckt. Dadurch kann insbesondere ermöglicht werden, dass die Nutöffnung z.B. zumindest über die gesamte Nut- und/oder Nutöffnungsbreite vorzugsweise zumindest nahezu totraumfrei geschlossen wird.

Die zumindest zwei Seitenabschnitte sind vorzugsweise an der dem Nutgrund abgewandten Außenfläche ausgebildet und/oder stellen z.B. in Breitenrichtung des Profils Seitenendabschnitte dar.

Vorzugsweise ist das Profil ausgebildet, um im komprimierten Zustand so verformt zu werden, dass es sich in der Nutöffnung über die gesamte Nutbreite oder sogar darüber hinaus erstreckt. Alternativ oder ergänzend kann das Profil ausgebildet sein, um im komprimierten Zustand so verformt zu werden, dass sich eine der Außenflächen z.B. in der Nutöffnung über die gesamte Nutbreite oder sogar darüber hinaus z.B. im Wesentlichen geradlinig erstreckt. Die Außenfläche des Profils, die dem Nutgrund abgewandt ist, kann im komprimierten Zustand z.B. von einem geradlinigen Bauteilabschnitt gedrückt werden. Zu erwähnen ist, dass bei einer bevorzugten aber nicht einschränkenden Ausführungsform der Erfindung die Nutbreite die Nutöffnungsbreite definiert.

Es ist möglich, dass das Profil ausgebildet ist, um im komprimierten Zustand gegen ein Fluid (z.B. Lack oder eine andere Flüssigkeit) zu dichten. Das Profil ist insbesondere lackund/oder lösemittelbeständig. Vorzugsweise ist das Profil ausgebildet, um im komprimierten Zustand so verformt zu werden, dass die Nut gegen ein Eindringen eines Fluids gedichtet wird und dadurch z.B. eine Leckage oder Fluid- oder Flüssigkeitsverschleppung vermeidbar oder zumindest reduzierbar ist.

Es ist möglich, dass sich das Profil im Querschnitt, vorzugsweise durch vorbestimmte unterschiedliche Profilhöhen, so reduziert, insbesondere so verjüngt, dass eine Spaltextrusion und/oder Nutüberfüllung zumindest reduziert oder sogar vermieden werden kann. Das Profil kann somit zweckmäßig ausgebildet sein, um im komprimierten Zustand so verformt zu werden, dass eine Spaltextrusion und/oder eine Nutüberfüllung, die zu einer Spaltextrusion führen könnte, vermieden oder zumindest reduziert werden kann.

Zu erwähnen ist, dass eine Spaltextrusion insbesondere deshalb nicht entsteht, da z.B. die Toleranzen so gewählt sind, dass bei einer Montage auf Block das Dichtelement den Totraum abdichtet. Insbesondere kann das Dichtelement konstruktiv bedingt im Spalt nicht verklemmt werden.

Insbesondere kann die Nutöffnung einen Aufweitungsbereich umfassen.

Das Profil ist zweckmäßig ausgebildet, um im komprimierten Zustand so verformt zu werden, dass es (z.B. in Breitenrichtung ein- oder beidseitig) in den Aufweitungsbereich hineinragt. In diesem Fall ist es sogar möglich, dass sich das Profil im komprimierten Zustand (z.B. in Breitenrichtung einoder beidseitig) über die Nut- und/oder Nutöffnungsbreite hinaus erstreckt. Das Profil kann insbesondere mit einem seiner Seitenabschnitte oder mit zwei seiner Seitenabschnitte in den Aufweitungsbereich ragen.

Es ist möglich, dass das Profil ausgebildet ist, um im komprimierten Zustand so verformt zu werden, dass zwischen dem Nutgrund und dem Profil ein Totraum erzeugt wird.

Das Profil umfasst im unkomprimierten Zustand eine maximale Profilbreite und eine maximale Profilhöhe. Die Nut umfasst zweckmäßig eine Nutbreite und eine Nuthöhe.

Es ist möglich, dass die maximale Profilbreite in unverformtem Zustand des Profils größer ist als die Nutbreite und/oder die maximale Profilhöhe in unverformtem Zustand des Profils größer ist als die Nuthöhe.

Bei einer besonders bevorzugten Ausführungsform liegt das Verhältnis von (zweckmäßig maximaler) Profilbreite zu (zweckmäßig maximaler) Profilhöhe im unkomprimierten Zustand im Bereich von 1,0 bis 1,35 oder sogar 1,5, insbesondere im Bereich von ≥ 1,0; 1,2; oder 1,4; und/oder von ≤ 1,1; 1,3 oder 1, 5.

Das Verhältnis von (zweckmäßig maximaler) Nutbreite zu (zweckmäßig maximaler) Nuthöhe liegt vorzugsweise im Bereich von 1,2 bis 2,1, insbesondere im Bereich von ≥ 1,2; 1,4; 1,6; 1,8; 2,0; oder 2,2; und/oder von 1,3; 1,5; 1,7; 1,9; 2,1; oder 2,3.

Zweckmäßig ist das Profil so ausgebildet, dass sowohl bei der minimalen als auch bei der maximalen Konfiguration eine Spaltextrusion zumindest reduziert werden kann und zweckmäßig ein Verpressen des Dichtelements in den Flanschbereich (Nutüberfüllung) zumindest reduzierbar ist.

Es ist möglich, dass im unkomprimierten Zustand des Profils der Bereich des Profils, der die maximale Profilhöhe definiert, relativ zu der Profilbreite außermittig ausgebildet ist.

Beispielsweise kann das Profil im Querschnitt im unkomprimierten Zustand einen im Wesentlichen dreieck- oder trapezförmigen Grundkörper ausbilden, dessen Außenflächen jedoch im Rahmen der Erfindung mit Erhebungen und/oder Vertiefungen versehen sein können. Außerdem können im Rahmen der Erfindung dessen Ecken reduziert sein (z.B. abgerundet und/oder angeschrägt).

Es ist möglich, dass mindestens eine der zumindest zwei Außenflächen mit zumindest einem Vorsprungs-/Stützabschnitt versehen ist.

Der zumindest eine Vorsprungsabschnitt steht im unkomprimierten Zustand des Profils zweckmäßig von der Außenfläche, an der er ausgebildet ist, ab. Insbesondere ist der zumindest eine Vorsprungsabschnitt angepasst, um im komprimierten Zustand das Dichtelement zu stabilisieren (z.B. ein unerwünschtes Verkippen oder Verrutschen des Dichtelements zu reduzieren oder zu verhindern). Bei einer besonders bevorzugten Ausführungsform sind beide Außenflächen mit jeweils zumindest einem Vorsprungsabschnitt versehen, die sich zweckmäßig in entgegengesetzte Richtungen erstrecken. Durch den oder die Vorsprungsabschnitte kann insbesondere eine ausreichende Druckfestigkeit/-stabilität gewährleistet werden, vorzugsweise auch bei einer dynamischen Druckbelastung im Druckbereich von z.B. über 14, 15 oder sogar 16 Bar.

Es ist möglich, dass im unkomprimierten Zustand das Profil im Bereich des zumindest einen Vorsprungsabschnitts eine Profilhöhe aufweist, die kleiner ist als die maximale Profilhöhe.

Es ist möglich, dass das Profil so ausgebildet ist, dass im komprimierten Zustand des Profils der zumindest eine Vorsprungsabschnitt zumindest nahezu vollständig in das Profilinnere verformt wird und somit zweckmäßig von der Außenfläche, der er zugeordnet ist, kaum oder nicht mehr absteht.

Vorzugsweise erstreckt sich der zumindest eine Vorsprungsabschnitt im unkomprimierten Zustand des Profils zumindest teilweise über die Profilbreitenmitte.

Es ist möglich, dass sich im unkomprimierten Zustand das Profil im Querschnitt von dem Bereich, der die maximale Profilhöhe definiert, zu zumindest einer, vorzugsweise zu beiden Seiten hin verjüngt. Insbesondere kann sich das Profil bis zu dem zumindest einen Vorsprungsabschnitt verjüngen, und von dem zumindest einen Vorsprungsabschnitt weiter vorzugsweise bis zum einen seitlichen Profilende verjüngen. Zweckmäßig kann sich das Profil auch zum anderen seitlichen Profilende verjüngen.

Das Profil kann im unkomprimierten Zustand im Querschnitt zumindest einen reduzierten Eckbereich umfassen, der zweckmäßig im komprimierten Zustand durch das Profil zumindest teilweise ausgefüllt wird. Bevorzugt ist im unkomprimierten Zustand des Profils ein reduzierter Eckbereich an der dem Nutgrund abgewandten Außenfläche vorgesehen.

Es ist möglich, dass die zumindest zwei Seitenflächen im unkomprimierten Zustand des Profils abschnittsweise einen Verjüngungswinkel von kleiner oder gleich 60°, 50°, 40°, 30° oder 20° einschließen.

Das Dichtelement eignet sich insbesondere für ein Beschichtungsanlagenbauteil (z.B. Farb-/Lackverschraubung, Zerstäuber, Zerstäuberschnittstelle, Farbwechsler, Farbdruckregler, Farbwechsler- und/oder Farbdruckreglerschnittstelle, Ventil, Ventilschnittstelle, etc.).

Zu erwähnen ist, dass die Nut vorzugsweise eine Ringnut ist und/oder im Querschnitt im Wesentlichen rechteckförmig ausgebildet ist (z.B. mit abgerundeten oder angeschrägten Ecken im Nutöffnungs- und/oder Nutgrundbereich). Zweckmäßig entspricht die Breite der Nutöffnung (Nutöffnungsbreite) vorzugsweise der Breite der Nut (Nutbreite). Die Erfindung umfasst aber auch Ausführungsformen, bei denen die Nut im Querschnitt unterschiedliche Breiten aufweist, z.B. als im Wesentlichen trapezförmige Nut ausgeführt ist.

Es ist möglich, dass eine als Ringnut ausgebildete Nut einen Innendurchmesser aufweist und ein als Dichtring ausgebildetes Dichtelement einen Innendurchmesser aufweist. Zweckmäßig ist der Innendurchmesser des Dichtrings im unkomprimierten und/oder unverformten Ausgangszustand kleiner als der Innendurchmesser der Ringnut. Somit ist das Dichtelement vorzugsweise angepasst, um in die Ringnut eingespannt zu werden.

Es ist möglich, dass im unkomprimierten und/oder unverformten Zustand der Bereich des Profils, der die maximale Profilhöhe definiert, vorzugsweise zumindest nahe dem Innendurchmesser des Dichtelements ausgebildet ist, um zweckmäßig hier zumindest totraumarm abzudichten und/oder sich das Profil zum Außendurchmesser hin verjüngt, um zweckmäßig Platz für das zu verdrängende Volumen des Profils zu schaffen.

Zu erwähnen ist ferner, dass die Nutöffnung verschiedene Ausgestaltungen aufweisen kann, z.B. als sich aufweitende Nutöffnung ausführbar ist.

Außerdem ist zu erwähnen, dass das Profil vorzugsweise ein Vollprofil ist, das z.B. aus einem elastischen Material hergestellt sein kann.

Zu erwähnen ist darüber hinaus, dass der unkomprimierte Zustand insbesondere den unkomprimierten und/oder unverformten Ausgangszustand des Profils und/oder des Dichtelements umfassen kann.

Die Erfindung umfasst auch eine Dichtungsanordnung (z.B. eine Flanschabdichtung) mit einem wie hierin beschriebenen Dichtelement, zwei Bauteilabschnitten und einer Nut, die in einem der zwei Bauteilabschnitte ausgebildet ist und eine Nutöffnung und einen Nutgrund aufweist. Die Dichtungsanordnung im Rahmen der Erfindung kann das Dichtelement im komprimierten Zustand umfassen, aber auch im unkomprimierten Zustand.

Außerdem umfasst die Erfindung ein Beschichtungsanlagenbauteil (z.B. Flanschabdichtung, Farb-/Lackverschraubung, Zerstäuber, Zerstäuberschnittstelle, Farbwechsler, Farbregler, Farbwechsler- und/oder Farbdruckreglerschnittstelle, Ventil, Ventilschnittstelle, etc.) mit zwei Bauteilabschnitten und einer Nut, die in einem der zwei Bauteilabschnitte ausgebildet ist und eine Nutöffnung und einen Nutgrund aufweist. In die Nut ist ein Dichtelement eingesetzt, das durch die zwei Bauteilabschnitte komprimiert wird und das zwischen den zwei Bauteilabschnitten dichtet. Das Dichtelement umfasst ein Profil mit zumindest zwei Außenflächen und/oder mit zweckmäßig im unkomprimierten Zustand unterschiedlichen Profilhöhen. Das Profil ist so verformt, dass es sich mit einem seiner Seitenabschnitte in die Nutöffnung erstreckt und vorzugsweise somit die Nutöffnung abschnittsweise schließt. Des Weiteren kann das Dichtelement wie hierin beschrieben ausgebildet sein.

Die vorstehend beschriebenen Merkmale und bevorzugten Ausführungsbeispiele der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele in Verbindung mit den beigefügten Figuren.
- Figur 1: zeigt eine perspektivische Ansicht eines Dichtelements gemäß einer Ausführungsform der Erfindung in unkomprimiertem (unverformtem) Zustand,
- Figur 2: zeigt das Dichtelement aus Figur 1 im Querschnitt in unkomprimiertem Zustand,
- Figur 3: zeigt das Dichtelement aus den Figuren 1 und 2 im Querschnitt in teilweise verformtem Zustand,
- Figur 4: zeigt das Dichtelement aus den Figuren 1 bis 3 im Querschnitt im komprimierten Zustand,
- Figur 5: zeigt ein Spannungsdiagramm eines Dichtelements gemäß einer anderen Ausführungsform der Erfindung im Querschnitt in teilweise verformtem Zustand,
- Figur 6: zeigt ein Spannungsdiagramm des Dichtelements aus Figur 5 im Querschnitt im komprimierten Zustand, und
- Figur 7: zeigt eine beispielhafte Nut im Querschnitt in vergrößertem Maßstab.

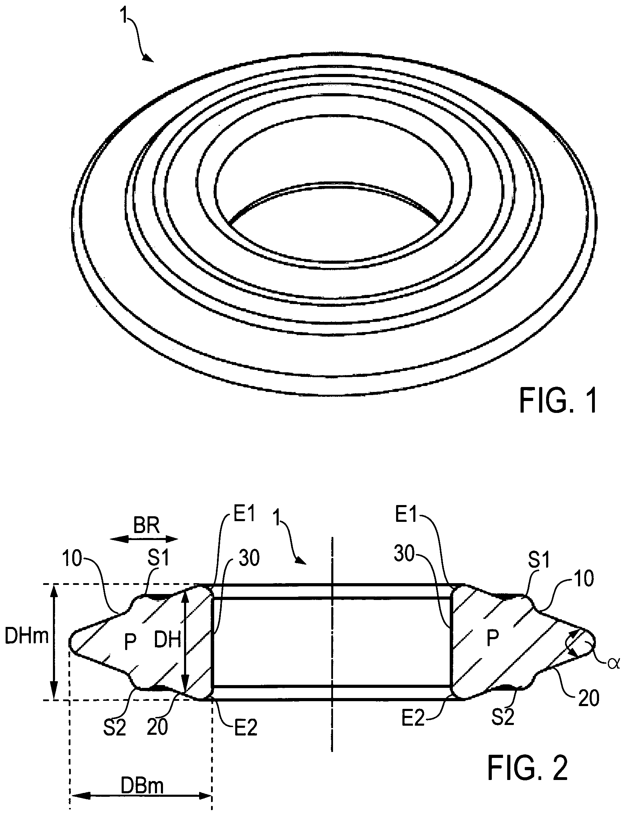

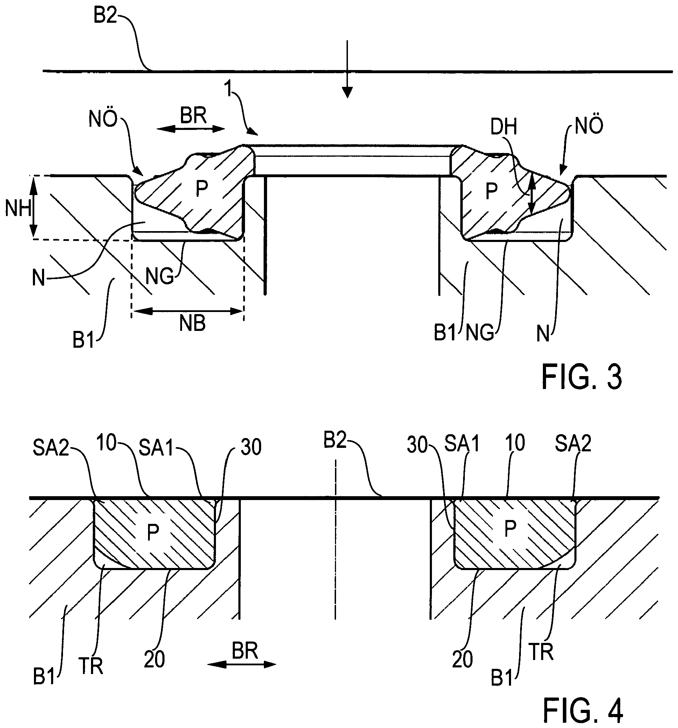

Figur 1 zeigt eine perspektivische Ansicht eines Dichtelements 1 in Form eines Dichtrings, während Figur 2 das Dichtelement 1 im Querschnitt zeigt. Die Figuren 1 und 2 zeigen das Dichtelement 1 in unverformtem und/oder unkomprimiertem (Ausgangs-) Zustand. Figur 3 zeigt das Dichtelement 1 aus den Figuren 1 und 2 im Querschnitt in teilweise verformtem Zustand, während es von dem unkomprimierten Zustand in den komprimierten Zustand gebracht wird.

Das Dichtelement 1 ist ausgebildet, um im komprimierten Zustand zwischen zwei Bauteilabschnitten B1 und B2 zu dichten und in einer Nut N durch die zwei Bauteilabschnitte B1 und B2 komprimiert zu werden, wie in den Figuren 3 und 4 gesehen werden kann. Die Nut N umfasst eine Nutöffnung NÖ, einen Nutgrund NG, eine Nutbreite NB und eine Nuthöhe NH. In den Figuren 3 und 4 kann gesehen werden, dass die Nut N im Querschnitt eine im Wesentlichen rechteckförmige Nut ist, die im Rahmen der Erfindung aber auch andere Ausgestaltungen annehmen kann. Die Nutbreite NB definiert die Nutöffnungsbreite, so dass die Nutöffnungsbreite der Nutbreite NB entspricht.

Wie in den Figuren 2 und 3 gesehen werden kann, umfasst das Dichtelement 1 ein Profil P, das drei Außenflächen 10, 20 und 30 aufweist. Das Profil P umfasst in seiner Breitenrichtung BR verschiedene Profilhöhen DH, z.B. eine maximale Profilhöhe DHm. Außerdem umfasst das Profil P eine maximale Profilbreite DBm. Der Bereich des Profils P, der die maximale Profilhöhe DHm umfasst, ist relativ zu der Profilbreite außermittig ausgebildet. Der Grundkörper des Profils P ist im Querschnitt im Wesentlichen dreieck- oder trapezförmig ausgeführt und umfasst abgerundete Ecken.

Figur 2 zeigt, dass die Außenfläche 10 mit einem Vorsprungsabschnitt S1 versehen ist. Alternativ oder ergänzend kann die Außenfläche 20 mit einem Vorsprungsabschnitt S2 versehen sein. Der Vorsprungsabschnitt S1 steht von der Außenfläche 10 ab und der Vorsprungsabschnitt S2 steht von der Außenfläche 20 ab. Die zwei Vorsprungsabschnitte S1 und S2 erstrecken sich zumindest teilweise über die Profilbreitenmitte. Das Profil P weist im Bereich der zwei Vorsprungsabschnitte S1 und S2 eine Profilhöhe auf, die kleiner ist als die maximale Profilhöhe DHm. Die Vorsprungsabschnitte S1 und S2 sind angepasst, um im komprimierten Zustand ein unerwünschtes Verkippen oder Verrutschen des Dichtelements 1 zumindest zu reduzieren.

Einerseits verjüngt sich das Profil P von dem Bereich, der die maximale Profilhöhe DHm definiert, bis zu den Vorsprungsabschnitten S1 und S2, und von den Vorsprungsabschnitten S1 und S2 weiter vorzugsweise bis zum einen seitlichen Profilende. Andererseits verjüngt sich das Profil P von dem Bereich, der die maximale Profilhöhe DHm definiert, zum anderen seitlichen Profilende.

Das Profil P umfasst im Querschnitt zwei reduzierte Eckbereiche E1 und E2, die im komprimierten Zustand durch das Profil P zumindest teilweise ausgefüllt werden.

Wie außerdem in den Figuren 2 und 3 gesehen werden kann, schließen die zwei Außenflächen 10 und 20 abschnittsweise einen Verjüngungswinkel α von ungefähr 45° ein.

Wie z.B. in Figur 3 zu sehen ist, wird das Dichtelement 1 in eine als Ringnut ausgeführte Nut N eingesetzt. Das Dichtelement 1 weist einen Innendurchmesser auf und die als Ringnut ausgeführte Nut N weist einen Innendurchmesser auf, wobei der Innendurchmesser des Dichtelements 1 im unverformten und/oder unkomprimierten Ausgangszustand des Dichtelements 1 kleiner ist als der Innendurchmesser der als Ringnut ausgeführten Nut N. Die maximale Profilhöhe DHm des Profils P ist zumindest nahe dem Innendurchmesser des Dichtelements 1 ausgebildet und verjüngt sich zweckmäßig von dort zum Außendurchmesser hin.

Aus den Figuren 2 bis 4 wird ersichtlich, dass im unverformten Zustand des Profils P die maximale Profilbreite DBm größer ist als die Nutbreite NB und die maximale Profilhöhe DHm größer ist als die Nuthöhe NH. Das Verhältnis von maximaler Profilbreite DBm zu maximaler Profilhöhe DHm liegt im Bereich von 1,0 bis 1,35. Das Verhältnis von Nutbreite NB zu Nuthöhe NH liegt im Bereich von 1,2 bis 2,1.

Figur 4 zeigt das Dichtelement 1 aus den Figuren 1 bis 3 im komprimierten Zustand. Das Profil P umfasst im komprimierten Zustand zwei Seitenabschnitte SA1 und SA2, die an der dem Nutgrund NG abgewandten Außenfläche 10 ausgebildet sind und in Breitenrichtung BR des Profils P Seitenendabschnitte darstellen.

Das Profil P ist im komprimierten Zustand so verformt, dass es sich mit den zwei Seitenabschnitten SA1 und SA2 in die Nutöffnung NÖ erstreckt und dadurch die Nutöffnung NÖ beidseitig abschnittsweise schließt, wodurch eine Leckage oder Lack-/Farbverschleppung zumindest reduzierbar ist. Das Profil P ist im komprimierten Zustand ferner so verformt, dass es sich auch zwischen den zwei Seitenabschnitten SA1 und SA2 in die Nutöffnung NÖ erstreckt, wodurch die Nutöffnung NÖ über die gesamte Nutbreite NB im Wesentlichen totraumfrei geschlossen wird. Gleichzeitig weist das Profil P unterschiedliche Profilhöhen DH auf, die im Querschnitt zu so einer Verjüngung oder Reduzierung des Profils P in einer oder beiden Breitenrichtungen BR führen, dass eine Nutüberfüllung, die z.B. eine Spaltextrusion verursachen könnte, vermieden oder zumindest reduziert werden kann.

Aus Figur 4 wird ferner ersichtlich, dass das Profil P so verformt ist, dass die Vorsprungsabschnitte S1 und S2 in das Profilinnere gedrückt sind und somit nicht mehr von den Außenflächen 10 und 20 abstehen, während zwischen dem Nutgrund NG und dem Profil P ein Totraum TR erzeugt wird.

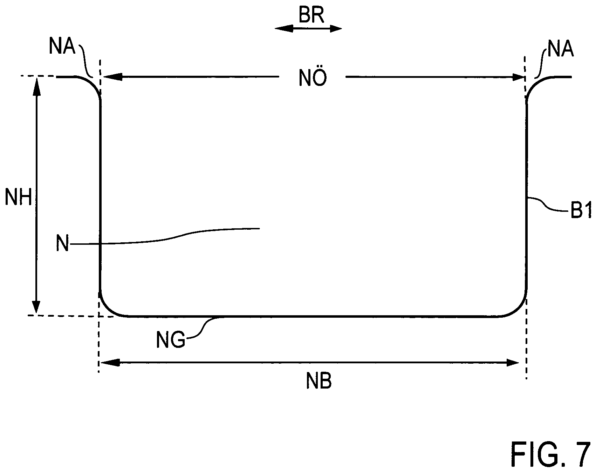

Figur 7 zeigt eine beispielhafte Nut N in vergrößertem Maßstab. Die Nut N gemäß Figur 7 stimmt weitgehend mit dem vorstehend beschriebenen Ausführungsbeispiel überein, wobei ähnliche oder identische Teile mit den gleichen Bezugszeichen versehen sind und zur Vermeidung von Wiederholungen auch auf die vorstehende Beschreibung verwiesen wird.

Die Nut N gemäß Figur 7 ist im Bauteilabschnitt B1 vorgesehen, ist im Querschnitt im Wesentlichen rechteckförmig ausgeführt und umfasst z.B. abgerundete Ecken. Die Nut N umfasst eine Nutöffnung NÖ, einen Nutgrund NG, eine Nuthöhe NH und eine Nutbreite NB. Die Nutöffnung NÖ weist eine Nutöffnungsbreite auf. Die Nutöffnungsbreite entspricht der Nutbreite NB. Wie in Figur 7 zu sehen, kann die Nutöffnung NÖ z.B. als eine sich aufweitende Nutöffnung ausgeführt sein und somit einen Aufweitungsbereich NA umfassen. Das Bezugszeichen BR kennzeichnet die Breitenrichtung der Nut N, der Nutöffnung NÖ und des Aufweitungsbereichs NA.

Für den Fall, dass die Nutöffnung NÖ, wie in Figur 7 gezeigt, einen Aufweitungsbereich NA umfasst, kann das Profil P zweckmäßig so ausgebildet sein, dass es im komprimierten Zustand vorzugsweise beidseitig mit seinen zwei Seitenabschnitten SA1 und SA2 in den Aufweitungsbereich NA hineinragt und den Aufweitungsbereich NA in dessen Breitenrichtung BR zumindest reduziert.

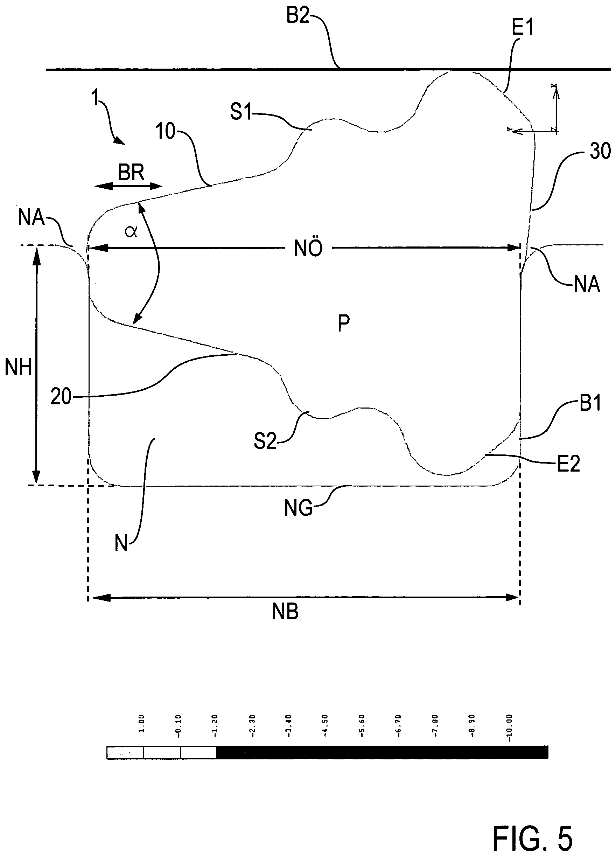

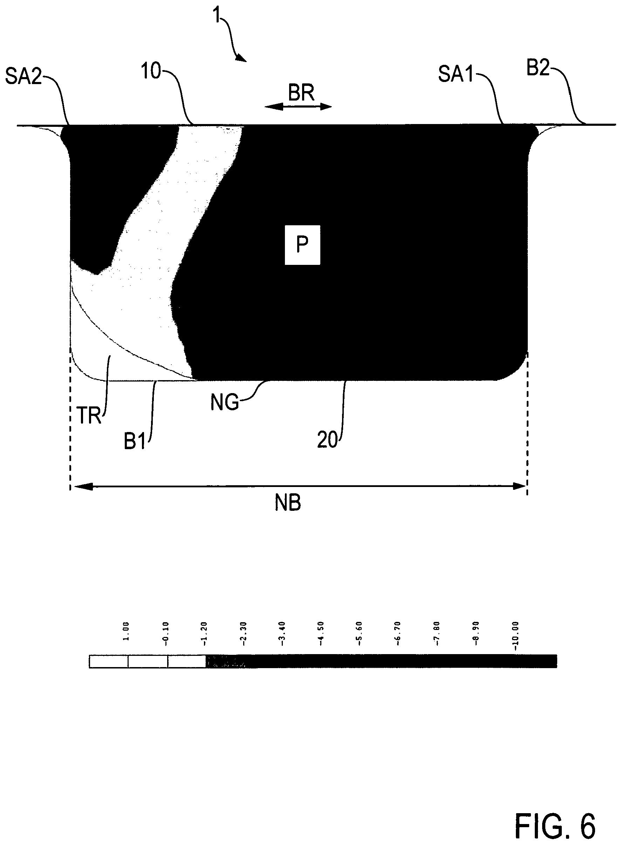

Figur 5 zeigt einen Teil eines Dichtelements gemäß einer anderen Ausführungsform der Erfindung im Querschnitt in teilweise verformtem Zustand, während es von dem unkomprimierten Zustand in den komprimierten Zustand gebracht wird. Figur 6 zeigt ein Spannungsdiagramm des Dichtelements 1 aus Figur 5 im Querschnitt im komprimierten Zustand.

Das Dichtelement gemäß den Figuren 5 und 6 stimmt weitgehend mit den vorstehend beschriebenen Ausführungsbeispielen überein, wobei ähnliche oder identische Teile mit den gleichen Bezugszeichen versehen sind und zur Vermeidung von Wiederholungen auch auf die vorstehende Beschreibung verwiesen wird.

Wiederum entspricht die Nutöffnungsbreite der Nutbreite NB. Aus den Figuren 5 und 6 wird insbesondere nochmals ersichtlich, dass das Profil P ausgebildet ist, um im komprimierten Zustand so verformt zu werden, dass es sich nicht nur mit zwei seiner Seitenabschnitte SA1 und SA2 in die Nutöffnung NÖ erstreckt und dadurch die Nutöffnung NÖ beiderseitig abschnittsweise schließt, sondern es sich auch zwischen den zwei Seitenabschnitten SA1 und SA2 in der Nutöffnung NÖ erstreckt und somit die Nutöffnung NÖ über die gesamte Nutbreite NB vorzugsweise zumindest nahezu totraumfrei schließen kann. Die Außenfläche 10 wird durch den Bauteilabschnitt B2 so verformt, dass sie sich im Wesentlichen geradlinig über die gesamte Nutbreite NB erstreckt. Außerdem kann gesehen werden, dass im komprimierten Zustand die Vorsprungsabschnitte S1 und S2 in das Profilinnere verformt sind und nicht mehr von den Außenflächen 10 und 20 abstehen.

Die in den Figuren 5 und 6 gezeigte Nut N umfasst einen Nutaufweitungsbereicht NA. Das Profil P ragt im komprimierten Zustand mit zwei seiner Seitenabschnitte SA1 und SA2 in den Aufweitungsbereich NA hinein, wodurch der Aufweitungsbereich NA in seiner Breitenrichtung BR beidseitig reduziert wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für die Merkmale und den Gegenstand der Unteransprüche unabhängig von den in Bezug genommenen Ansprüchen.

## Patentansprüche

1. Dichtelement, vorzugsweise Dichtring, für ein Beschichtungsanlagenbauteil, wobei das Dichtelement angepasst ist, um zwischen zwei Bauteilabschnitten (B1, B2) zu dichten und in einer Nut (N) durch die zwei Bauteilabschnitte (B1, B2) komprimiert zu werden, wobei die Nut (N) in einem der zwei Bauteilabschnitte (B1, B2) ausgebildet ist und eine Nutöffnung (NÖ) und einen Nutgrund (NG) aufweist, mit
- einem Profil (P), das im unkomprimierten Zustand unterschiedliche Profilhöhen (DH) und zumindest zwei Außenflächen (10, 20) umfasst,
wobei
- das Profil (P) ausgebildet ist, um im komprimierten Zustand so verformt zu werden, dass es sich mit zumindest einem seiner Seitenabschnitte (SA1, SA2) in die Nutöffnung (NÖ) erstreckt und vorzugsweise dadurch die Nutöffnung (NÖ) abschnittsweise schließt,
**dadurch gekennzeichnet, dass**
- im unkomprimierten Zustand des Profils (P) mindestens eine der zumindest zwei Außenflächen (10, 20) mit zumindest einem Vorsprungsabschnitt (S1, S2) versehen ist, der von der Außenfläche (10, 20), an der er ausgebildet ist, absteht,
- im unkomprimierten Zustand des Profils (P) das Profil (P) im Bereich des zumindest einen Vorsprungsabschnitts (S1, S2) eine Profilhöhe aufweist, die kleiner ist als die maximale Profilhöhe (DHm), und
- im unkomprimierten Zustand des Profils (P) der Bereich des Profils (P), der die maximale Profilhöhe (DHm) definiert, relativ zu der Profilbreite außermittig ausgebildet ist.

2. Dichtelement nach Anspruch 1, **dadurch gekennzeichnet, dass** das Profil (P) ausgebildet ist, um im komprimierten Zustand so verformt zu werden, dass es sich mit zwei seiner Seitenabschnitte (SA1, SA2) in die Nutöffnung (NÖ) erstreckt und vorzugsweise dadurch die Nutöffnung (NÖ) abschnittsweise schließt.

3. Dichtelement nach einem der vorhergehenden Ansprüche, **dadurch gekennzeichnet, dass** das Profil (P) ausgebildet ist, um im komprimierten Zustand so verformt zu werden, dass es sich auch zwischen den zwei Seitenabschnitten (SA1, SA2) in die Nutöffnung (NÖ) erstreckt und vorzugsweise dadurch die Nutöffnung (NÖ) im Wesentlichen totraumfrei geschlossen wird, insbesondere über zumindest die gesamte Nutbreite (NB).

4. Dichtelement nach einem der vorhergehenden Ansprüche, **dadurch gekennzeichnet, dass** das Profil (P) ausgebildet ist, um im komprimierten Zustand so verformt zu werden,
- dass es sich in der Nutöffnung (NÖ) über zumindest die gesamte Nutbreite (NB) erstreckt, oder
- dass sich eine der Außenflächen (10) über zumindest die gesamte Nutbreite (NB) im Wesentlichen geradlinig erstreckt, vorzugsweise in der Nutöffnung (NÖ), oder
- dass es die Nutöffnung (NÖ) über die vorzugsweise gesamte Nutbreite (NB) im Wesentlichen totraumfrei schließt.

5. Dichtelement nach einem der vorhergehenden Ansprüche, **dadurch gekennzeichnet, dass** das Profil (P) ausgebildet ist,
- um im komprimierten Zustand gegen ein Fluid zu dichten, insbesondere gegen Lack und vorzugsweise lackund lösemittelbeständig ist, und/oder
- um im komprimierten Zustand so verformt zu werden, dass die Nut (N) gegen ein Eindringen eines Fluids gedichtet wird und dadurch eine Leckage oder Fluidverschleppung vermieden oder zumindest reduziert wird.

6. Dichtelement nach einem der vorhergehenden Ansprüche, **dadurch gekennzeichnet, dass** das Profil (P) durch vorbestimmte unterschiedliche Profilhöhen (DH) so ausgebildet ist, insbesondere so reduziert ist, dass eine Spaltextrusion und/oder Nutüberfüllung vermieden oder zumindest reduziert wird.

7. Dichtelement nach einem der vorhergehenden Ansprüche, **dadurch gekennzeichnet, dass** die Nutöffnung (NÖ) mit einem Aufweitungsbereich (NA) versehen ist und das Profil (P) ausgebildet ist, um im komprimierten Zustand so verformt zu werden, dass es in den Aufweitungsbereich (NA) hineinragt, vorzugsweise mit dem einen oder den zwei Seitenabschnitten (SA1, SA2).

8. Dichtelement nach einem der vorhergehenden Ansprüche, **dadurch gekennzeichnet, dass** das Profil (P) ausgebildet ist, um im komprimierten Zustand so verformt zu werden, dass zwischen dem Nutgrund (NG) und dem Profil (P) ein Totraum (TR) erzeugt wird.

9. Dichtelement nach einem der vorhergehenden Ansprüche, **dadurch gekennzeichnet, dass** im unkomprimierten Zustand des Profils (P) die maximale Profilbreite (DBm) größer ist als die Nutbreite (NB) und die maximale Profilhöhe (DHm) größer ist als die Nuthöhe (NH).

10. Dichtelement nach einem der vorhergehenden Ansprüche, **dadurch gekennzeichnet, dass** im unkomprimierten Zustand des Profils (P) das Verhältnis von maximaler Profilbreite (DBm) zu maximaler Profilhöhe (DHm) im Bereich von 1,0 bis 1,35 liegt.

11. Dichtelement nach einem der vorhergehenden Ansprüche, **dadurch gekennzeichnet, dass** das Verhältnis von Nutbreite (NB) zu Nuthöhe (NH) im Bereich von 1,2 bis 2,1 liegt.

12. Dichtelement nach einem der vorhergehenden Ansprüche, **dadurch gekennzeichnet, dass** im unkomprimierten Zustand des Profils (P) das Profil (P) im Querschnitt durch einen im Wesentlichen dreieck- oder trapezförmigen Grundkörper ausgebildet ist.

13. Dichtelement nach einem der vorhergehenden Ansprüche, **dadurch gekennzeichnet, dass** im unkomprimierten Zustand des Profils (P) die zwei Außenflächen (10, 20) jeweils mit zumindest einem Vorsprungsabschnitt (S1, S2) versehen sind, die von der jeweiligen Außenfläche (10, 20), an der sie ausgebildet sind, abstehen.

14. Dichtelement nach einem der vorhergehenden Ansprüche, **dadurch gekennzeichnet, dass** im unkomprimierten Zustand des Profils (P) sich der zumindest eine Vorsprungsabschnitt (S1, S2) zumindest teilweise über die Profilbreitenmitte erstreckt.

15. Dichtelement nach einem der vorhergehenden Ansprüche, **dadurch gekennzeichnet, dass**
- im komprimierten Zustand des Profils (P) der zumindest eine Vorsprungsabschnitt (S1, S2) in das Profilinnere verformt wird, vorzugsweise zumindest nahezu vollständig, und/oder
- der zumindest eine Vorsprungsabschnitt (S1, S2) angepasst ist, um im komprimierten Zustand des Profils (P) das Dichtelement zu stabilisieren.

16. Dichtelement nach einem der vorhergehenden Ansprüche, **dadurch gekennzeichnet, dass** im unkomprimierten Zustand des Profils (P) sich das Profil (P) im Querschnitt von dem Bereich, der die maximale Profilhöhe (DHm) definiert,
- zu beiden Seiten hin verjüngt, oder
- einerseits bis zu dem zumindest einen Vorsprungsabschnitt (S1, S2) verjüngt, und von dem zumindest einen Vorsprungsabschnitt (S1, S2) weiter bis zum einen seitlichen Profilende verjüngt, und andererseits zum anderen seitlichen Profilende verjüngt.

17. Dichtelement nach einem der vorhergehenden Ansprüche, **dadurch gekennzeichnet, dass** im unkomprimierten Zustand des Profils (P) das Profil (P) im Querschnitt zumindest einen reduzierten Eckbereich (E1, E2) aufweist, der im komprimierten Zustand zumindest teilweise durch das Profil (P) ausgefüllt wird.

18. Dichtelement nach einem der vorhergehenden Ansprüche, **dadurch gekennzeichnet, dass** im unkomprimierten Zustand des Profils (P) die zumindest zwei Außenflächen abschnittsweise einen Verjüngungswinkel (α) von ≤ 50°, 40° oder 30° einschließen.

19. Dichtelement nach einem der vorhergehenden Ansprüche, **dadurch gekennzeichnet, dass** die Nut (N) im Querschnitt im Wesentlichen rechteckförmig ist und vorzugsweise als Ringnut ausgeführt ist.

20. Dichtelement nach einem der vorhergehenden Ansprüche, **dadurch gekennzeichnet,**
- **dass** das Dichtelement ein einen Innendurchmesser aufweisender Dichtring ist und die Nut (N) eine einen Innendurchmesser aufweisende Ringnut ist, wobei der Innendurchmesser des Dichtelements im unverformten Ausgangszustand kleiner ist als der Innendurchmesser der Ringnut, und/oder
- **dass** im unkomprimierten Zustand des Profils (P) der Bereich des Profils (P), der die maximale Profilhöhe (DHm) definiert, zumindest nahe dem Innendurchmesser des Dichtelements ausgebildet ist und sich das Profil (P) zum Außendurchmesser hin verjüngt.

21. Dichtungsanordnung, mit einem Dichtelement, zwei Bauteilabschnitten (B1, B2) und einer Nut (N), die in einem der zwei Bauteilabschnitte (B1, B2) ausgebildet ist und eine Nutöffnung (NÖ) und einen Nutgrund (NG) aufweist, **dadurch gekennzeichnet, dass** das Dichtelement gemäß einem der vorhergehenden Ansprüche ausgebildet ist.

22. Beschichtungsanlagenbauteil, mit zwei Bauteilabschnitten (B1, B2) und einer Nut (N), die in einem der zwei Bauteilabschnitte (B1, B2) ausgebildet ist und eine Nutöffnung (NÖ) und einen Nutgrund (NG) aufweist, wobei in die Nut (N) ein Dichtelement nach einem der Ansprüche 1 bis 20 eingesetzt ist, das durch die zwei Bauteilabschnitte (B1, B2) komprimiert wird und das zwischen den zwei Bauteilabschnitten (B1, B2) dichtet, wobei das Dichtelement
- ein Profil (P) mit im unkomprimierten Zustand unterschiedlichen Profilhöhen (DH) und zumindest zwei Außenflächen (10, 20) umfasst, und
- das Profil (P) sich mit zumindest einem seiner Seitenabschnitte (SA1, SA2) in die Nutöffnung (NÖ) erstreckt und vorzugsweise dadurch die Nutöffnung (NÖ) abschnittsweise schließt.

## Claims

1. Sealing element, preferably sealing ring, for a coating system component, wherein the sealing element is adapted to seal between two component sections (B1, B2) and to be compressed by the two component sections (B1, B2) in a groove (N), wherein the groove (N) is provided in one of the two component sections (B1, B2) and has a groove opening (NO) and a groove bottom (NG), with
- a profile (P) which, in the non-compressed state, comprises different profile heights (DH) and at least two outer surfaces (10, 20),
wherein
- the profile (P) is configured to be deformed in the compressed state such that it extends with at least one of its side sections (SA1, SA2) into the groove opening (NO) and thereby preferably closes the groove opening (NO) in sections,
**characterised in that**
- in the non-compressed state of the profile (P), at least one of the at least two outer surface 10, 20) is provided with at least one projection section (S1, S2) which stands out from the outer surface (10, 20) on which it is formed,
- in the non-compressed state of the profile (P), the profile (P) has, in the region of the at least one projection section (S1, S2), a profile height which is smaller than the maximum profile height (DHm), and
- in the non-compressed state of the profile (P), the region of the profile (P) which defines the maximum profile height (DMm) is configured off-centre relative to the profile width.

2. Sealing element according to claim 1, **characterised in that** the profile (P) is configured to be deformed in the compressed state such that it extends with two of its side sections (SA1, SA2) into the groove opening (NO) and thereby preferably closes the groove opening (NÖ) in sections.

3. Sealing element according to one of the preceding claims, **characterised in that** the profile (P) is configured to be deformed in the compressed state such that it also extends between the two side sections (SA1, SA2) into the groove opening (NO) and thereby preferably closes the groove opening (NO) essentially dead space-free, particularly over at least the whole groove width (NB).

4. Sealing element according to one of the preceding claims, **characterised in that** the profile (P) is configured to be deformed in the compressed state,
- such that said profile extends in the groove opening (NO) over at least the whole of the groove width (NB), or
- such that one of the outer surfaces (10) extends over at least the whole of the groove width (NB) essentially in a straight line, preferably in the groove opening (NO), or
- such that said profile closes the groove opening (NO) essentially dead space-free, preferably over the whole groove width (NB).

5. Sealing element according to one of the preceding claims, **characterised in that** the profile (P) is configured,
- in the compressed state, to seal against a fluid, in particular against paint and is preferably paint resistant and solvent resistant, and/or
- in the compressed state, to be deformed such that the groove (N) is sealed against penetration of a fluid and, by that means, leakage or carry-over of fluid can be prevented or at least reduced.

6. Sealing element according to one of the preceding claims, **characterised in that** the profile (P) is configured by means of pre-determined different profile heights (DH), in particular reduced, such that a gap extrusion and/or groove over-filling is prevented or at least reduced.

7. Sealing element according to one of the preceding claims, **characterised in that** the groove opening (NO) is provided with an expansion region (NA) and the profile (P) is configured to be deformed in the compressed state such that it protrudes into the expansion region (NA), preferably with one or with both side section(s) (SA1, SA2).

8. Sealing element according to one of the preceding claims, **characterised in that** the profile (P) is configured to be deformed in the compressed state such that a dead space (TR) is formed between the groove bottom (NG) and the profile (P) .

9. Sealing element according to one of the preceding claims, **characterised in that**, in the non-compressed state of the profile (P), the maximum profile width (DBm) is greater than the groove width (NB) and the maximum profile height (DHm) is greater than the groove height (NH).

10. Sealing element according to one of the preceding claims, **characterised in that**, in the non-compressed state of the profile (P), the ratio of the maximum profile width (DBm) to the maximum profile height (DHm) lies in the range from 1.0 to 1.35.

11. Sealing element according to one of the preceding claims, **characterised in that** the ratio of the groove width (NB) to the groove height (NH) lies in the range from 1.2 to 2.1.

12. Sealing element according to one of the preceding claims, **characterised in that**, in the non-compressed state of the profile (P), the profile (P) is configured, in cross-section, by an essentially triangular or trapezoidal base body.

13. Sealing element according to one of the preceding claims, **characterised in that**, in the non-compressed state of the profile (P), the two outer surfaces (10,20) are respectively provided with at least one projection section (S1, S2) which stands out from the respective outer surface (10, 20) on which said projection sections are formed.

14. Sealing element according to one of the preceding claims, **characterised in that**, in the non-compressed state of the profile (P), the at least one projection section (S1, S2) extends at least partially over the centre of the profile width.

15. Sealing element according to one of the preceding claims, **characterised in that**,
- in the compressed state of the profile (P), the at least one projection section (S1, S2) is deformed into the profile interior, preferably at least almost completely, and/or
- the at least one projection section (S1, S2) is adapted in order to stabilise the sealing element in the compressed state of the profile (P).

16. Sealing element according to one of the preceding claims, **characterised in that**, in the non-compressed state of the profile (P), from the region which defines the maximum profile height (DHm), in cross-section the profile (P)
- tapers toward both sides, or
- tapers on one side as far as the at least one projection section (S1, S2) and further, from the at least one projection section (S1*,* S2), as far as a lateral profile end and, on the other side, to the other lateral profile end.

17. Sealing element according to one of the preceding claims, **characterised in that**, in the non-compressed state of the profile (P), the profile (P) has, in cross-section, at least one reduced corner section (E1, E2), which, in the compressed state, is filled at least partially by the profile (P) .

18. Sealing element according to one of the preceding claims, **characterised in that**, in the non-compressed state of the profile (P), the at least two outer surfaces enclose, in sections, a taper angle (α) of ≤ 50°, 40° or 30°.

19. Sealing element according to one of the preceding claims, **characterised in that** the groove (N) is essentially rectangular in cross-section and is preferably configured as an annular groove.

20. Sealing element according to one of the preceding claims, **characterized in that**,
- the sealing element is a sealing ring having an inner diameter and the groove (N) is an annular groove having an inner diameter, wherein the inner diameter of the sealing element, in the non-deformed starting state, is smaller than the inner diameter of the annular groove, and /or
- in the non-compressed state of the profile (P), the region of the profile (P) which defines the maximum profile height (DHm) is formed at least close to the inner diameter of the sealing element and the profile (P) tapers toward the outer diameter.

21. Sealing arrangement comprising a sealing element, two component sections (B1, B2) and a groove (N), which is provided in one of the two component sections (B1, B2), and comprising a groove opening (NO) and a groove bottom (NG), **characterised in that** the sealing element is configured according to one of the preceding claims.

22. Coating system component comprising two component sections (B1, B2) and a groove (N) which is provided in one of the two components sections (B1, B2), and a groove opening (NO) and a groove bottom (NG), wherein a sealing element according to one of claims 1 to 20, which is compressed by the two component sections (B1, B2) and creates a seal between the two component sections (B1, B2), is inserted into the groove (N), wherein the sealing element
- has a profile (P) which, in the non-compressed state, comprises different profile heights (DH) and at least two outer surfaces (10, 20), and
- the profile (P) extends with at least one of its side sections (SA1, SA2) into the groove opening (NO) and thereby preferably closes the groove opening (NÖ) in sections.

## Revendications

1. Elément d'étanchéité, de préférence bague d'étanchéité, pour un composant d'installation de revêtement, l'élément d'étanchéité étant adapté pour assurer une étanchéité entre deux parties de composant (B1, B2) et être comprimé dans une gorge (N) par les deux parties de composant (B1, B2), la gorge (N) étant constituée dans une des deux parties de composant (B1, B2) et présentant une ouverture de gorge (NÖ) et un fond de gorge (NG), avec
- un profil (P) qui, dans l'état non comprimé, comprend des hauteurs de profil (DH) différentes et au moins deux surfaces extérieures (10, 20),
- le profil (P) étant constitué pour, dans l'état comprimé, être déformé de façon à, par au moins une de ses parties latérales (SA1, SA2), s'étendre dans l'ouverture de gorge (NÖ) et de préférence fermer ainsi par segments l'ouverture de gorge (NÖ),
**caractérisé en ce que**,
- dans l'état non comprimé du profil (P), au moins une des au moins deux surfaces extérieures (10, 20) est munie d'au moins une partie de saillie (S1, S2) qui est distante de la surface extérieure (10, 20) sur laquelle elle est constituée,
- dans l'état non comprimé du profil (P), le profil (P) présente, dans la zone de la partie de saillie (S1, S2) au moins au nombre de un, une hauteur de profil qui est plus petite que la hauteur de profil maximale (DHm) et,
- dans l'état non comprimé du profil (P), la zone du profil (P) qui définit la hauteur de profil maximale (DHm) est constituée de façon excentrée par rapport à la largeur du profil.

2. Elément d'étanchéité selon la revendication 1, **caractérisé en ce que** le profil (P) est constitué pour, dans l'état non comprimé, être déformé de façon à s'étendre par deux de ses parties latérales (SA1, SA2) dans l'ouverture de gorge (NÖ) et de préférence fermer ainsi par segments l'ouverture de gorge (NÖ).

3. Elément d'étanchéité selon l'une des revendications précédentes, **caractérisé en ce que** le profil (P) est constitué pour, dans l'état comprimé, être déformé de façon à s'étendre également entre les deux parties latérales (SA1, SA2) dans l'ouverture de gorge (NÖ), et de préférence l'ouverture de gorge (NÖ) est ainsi fermée essentiellement sans espace mort, en particulier par le biais d'au moins la largeur de gorge (NB) totale.

4. Elément d'étanchéité selon l'une des revendications précédentes, **caractérisé en ce que** le profil (P) est constitué pour, dans l'état comprimé, être déformé de telle sorte
- qu'il s'étend dans l'ouverture de gorge (NÖ) sur au moins la largeur de gorge (NB) totale,
- qu'une des surfaces extérieures (10) s'étend essentiellement de façon rectiligne sur au moins la largeur de gorge (NB) totale, de préférence dans l'ouverture de gorge (NÖ), ou
- qu'il ferme essentiellement sans espace mort l'ouverture de gorge (NÖ) sur la largeur de gorge (NB) de préférence totale.

5. Elément d'étanchéité selon l'une des revendications précédentes, **caractérisé en ce que** le profil (P) est constitué
- pour, dans l'état comprimé, assurer une étanchéité vis-à-vis d'un fluide, en particulier vis-à-vis d'une peinture, et est de préférence résistant à la peinture et aux solvants, et/ou,
- dans l'état comprimé, être comprimé de telle sorte que la gorge (N) est rendue étanche vis-à-vis d'une intrusion d'un fluide et, de ce fait, une fuite ou un entraînement de fluide est évité(e) ou au moins réduit(e).

6. Elément d'étanchéité selon l'une des revendications précédentes, **caractérisé en ce que** le profil (P) est constitué de hauteurs de profil (DH) différentes prédéfinies, en particulier est réduit de sorte qu'une extrusion d'espace et/ou un encombrement de gorge est évité(e) ou au moins réduit(e).

7. Elément d'étanchéité selon l'une des revendications précédentes, **caractérisé en ce que** l'ouverture de gorge (NÖ) est munie d'une zone d'évasement (NA), et le profil (P) est constitué pour, dans l'état comprimé, être déformé de sorte qu'il dépasse dans la zone d'évasement (NA), de préférence par une partie latérale ou les deux parties latérales (SA1, SA2).

8. Elément d'étanchéité selon l'une des revendications précédentes, **caractérisé en ce que** le profil (P) est constitué pour, dans l'état comprimé, être déformé de sorte qu'un espace mort (TR) est produit entre le fond de gorge (NG) et le profil (P).

9. Elément d'étanchéité selon l'une des revendications précédentes, **caractérisé en ce que**, dans l'état non comprimé du profil (P), la largeur de profil maximale (DBm) est plus grande que la largeur de gorge (NB), et la hauteur de profil maximale (DHm) est plus grande que la hauteur de gorge (NH).

10. Elément d'étanchéité selon l'une des revendications précédentes, **caractérisé en ce que**, dans l'état non comprimé du profil (P), le rapport de la largeur de profil maximale (DBm) à la hauteur de profil maximale (DHm) se situe dans la plage de 1,0 à 1,35.

11. Elément d'étanchéité selon l'une des revendications précédentes, **caractérisé en ce que** le rapport de la largeur de gorge (NB) à la hauteur de gorge (NH) se situe dans la plage de 1,2 à 2,1.

12. Elément d'étanchéité selon l'une des revendications précédentes, **caractérisé en ce que**, dans l'état non comprimé du profil (P), le profil (P) est, dans la section transversale, constitué par un corps de base essentiellement de forme triangulaire ou trapézoïdale.

13. Elément d'étanchéité selon l'une des revendications précédentes, **caractérisé en ce que**, dans l'état non comprimé du profil (P), les deux surfaces extérieures (10, 20) sont respectivement munies d'au moins une partie de saillie (S1, S2) qui sont distantes de la surface extérieure (10, 20) respective sur laquelle elles sont constituées.

14. Elément d'étanchéité selon l'une des revendications précédentes, **caractérisé en ce que**, dans l'état non comprimé du profil (P), la partie de saillie (S1, S2) au moins au nombre de un s'étend au moins partiellement sur le milieu de la largeur du profil.

15. Elément d'étanchéité selon l'une des revendications précédentes, **caractérisé en ce que**,
- dans l'état comprimé du profil (P), la partie de saillie (S1, S2) au moins au nombre de un est déformée dans l'intérieur du profil, de préférence au moins presque complètement, et/ou
- la partie de saillie (S1, S2) au moins au nombre de un est adaptée pour stabiliser l'élément d'étanchéité dans l'état comprimé du profil (P).

16. Elément d'étanchéité selon l'une des revendications précédentes, **caractérisé en ce que**, dans l'état non comprimé du profil (P), le profil (P), dans la section transversale, à partir de la zone qui définit la hauteur de profil maximale (DHm),
- rétrécit vers les deux côté, ou
- rétrécit d'un côté jusqu'à la partie de saillie (S1, S2) au moins au nombre de un, et continue à rétrécir à partir de la partie de saillie (S1, S2) au moins au nombre de un jusqu'à une extrémité de profil latérale, et rétrécit d'un autre côté vers l'autre extrémité de profil latérale.

17. Elément d'étanchéité selon l'une des revendications précédentes, **caractérisé en ce que**, dans l'état non comprimé du profil (P), le profil (P) présente dans la section transversale au moins une zone de coin (E1, E2) réduite qui, dans l'état comprimé, est remplie au moins partiellement par le profil (P).

18. Elément d'étanchéité selon l'une des revendications précédentes, **caractérisé en ce que**, dans l'état non comprimé du profil (P), les au moins deux surfaces extérieures forment par segments un angle de rétrécissement (α) des 50°, 40° ou 30°.

19. Elément d'étanchéité selon l'une des revendications précédentes, **caractérisé en ce que** la gorge (N) est essentiellement rectangulaire dans la section transversale et est de préférence réalisée en tant que gorge annulaire.

20. Elément d'étanchéité selon l'une des revendications précédentes, **caractérisé en ce que**
- l'élément d'étanchéité est une bague d'étanchéité présentant un diamètre intérieur, et la gorge (N) est une gorge annulaire présentant un diamètre intérieur, le diamètre intérieur de l'élément d'étanchéité étant, dans l'état initial non déformé, plus petit que le diamètre intérieur de la gorge annulaire, et/ou
- dans l'état non comprimé du profil (P), la zone du profil (P) qui définit la hauteur de profil maximale (DHm) est constituée au moins près du diamètre intérieur de l'élément d'étanchéité, et le profil (P) se rétrécit vers le diamètre extérieur.

21. Dispositif d'étanchéité, avec un élément d'étanchéité, deux parties de composant (B1, B2) et une gorge (N) qui est constituée dans une des deux parties de composant (B1, B2) et présente une ouverture de gorge (NÖ) et un fond de gorge (NG), **caractérisé en ce que** l'élément d'étanchéité est constitué selon l'une des revendications précédentes.

22. Composant d'installation de revêtement, avec deux parties de composant (B1, B2) et une gorge (N) qui est constituée dans une des deux parties de composant (B1, B2) et présente une ouverture de gorge (NÖ) et un fond de gorge (NG), un élément d'étanchéité étant inséré dans la gorge (N) selon l'une des revendications 1 à 20 et étant comprimé par les deux parties de composant (B1, B2) et assurant une étanchéité entre les deux parties de composant (B1, B2), l'élément d'étanchéité
- comprenant un profil (P) avec, dans l'état non comprimé, des hauteurs de profil (DH) différentes et au moins deux surfaces extérieures (10, 20), et
- le profil (P) s'étendant par au moins une de ses parties latérales (SA1, SA2) dans l'ouverture de gorge (NÖ) et fermant de préférence ainsi par segments l'ouverture de gorge (NÔ).
